# NEW EUROPEAN PATENT SPECIFICATION

(11) **EP 1 070 452 B2**
(45) Date of publication and mention of the opposition decision: **27.12.2017**
(45) Mention of the grant of the patent: 25.08.2004
(21) Application number: 00203959.2
(22) Date of filing: 12.06.1995
(51) Int. Cl.: A01J 5/017, A01K 1/12

(54) **A method for automatically milking animals**
Verfahren zum automatischen Melken von Tieren
Méthode de traite automatique d'animaux

(30) Priority: 17.06.1994 NL 9400992
(43) Date of publication of application: 24.01.2001
(62) Divisional of application: 95920309.2
(73) Proprietor: MAASLAND N.V., 3147 PA Maassluis (NL)
(72) Inventor: van der Lely, Olaf, 6300 Zug (CH)
(74) Representative: Octrooibureau Van der Lely N.V.

(56) References cited:
- EP-A- 0 091 892
- EP-A- 0 551 957
- DE-A- 3 702 465
- NL-A- 8 602 505

## Description

The invention relates to a method of automatically milking animals in accordance with the preamble of claim 1.

Such a method is known from European patent application EP 0 091 892. In said document it is indicated that an animal reporting at or near the milking parlour will not be actually milked until it has been established that a predetermined time has elapsed since the last milking of this animal. However, a method in which it is only checked whether a minimum time since the last milking has elapsed on behalf of making a decision whether or not an animal can be milked is little flexible and does not guarantee that the animal will be milked at times which are in conformity with an optimum milk yield. Hence, in accordance with the invention, the method as set forth in the preceding paragraph is characterized by the characterising features of any one of claims 1, 3, 5, 7, 9 and 11. The decision whether or not an animal reporting at or near the milking parlour is to be milked, is made conditional on the passage of a time which, although variable, is defined again and again, in dependency on data concerning the animal's physical condition and/or the milk quality, so that the distinctive features of each individual animal can be taken into account in making the decision.

A first criterion usable in deciding whether an animal is allowed to be milked can be the degree of activity of the animal. This animal activity can be determined by means of an activity meter. Such an activity meter is often a step counter, which is attached to the animal and is read-out as soon as she passes by a sensor placed in the cowhouse, preferably near or at the milking parlour. When such an activity meter is also provided with a memory, into which the counter reading is automatically stored every time when a fixed period of e.g. five minutes, a quarter of an hour, half an hour or any other desired period of time has elapsed, all these counter readings stored in the memory can be retrieved when the animal passes the sensor, and thus there can be obtained a highly accurate picture of the animal activity in the last period, i.e. the period elapsed since the last time when the animal called at the milking parlour. When the animal, upon being milked, moves about, grazes or takes food and subsequently ruminates, and the animal activity during the respective times taken up is measured, then it is practicable to decide whether or not to milk the animal when it reports, on the basis of the course of activity determined. After rumination, the number of movements will be relatively lesser, due to the fact that the udder is heavy and the animal is troubled by this, and the animal is allowed to be milked. On the other hand, when it appears from the course of activity that the animal reports herself at the milking parlour without having had a period of rumination, it can be decided that the animal is not allowed to be milked yet on account of the course of activity.

A second criterion suitable for application in deciding whether or not the animal is allowed to be milked can be the course of the oestrous period. For each animal, this, too, is recorded in the computer. Particularly, it applies that the milk production will be lower in the period of fertility, during which period people may want to inseminate the animal. In the period of fertility it will often be possible to establish also that the animal activity is slightly higher than before; moreover, this also applies to the animal's temperature. Hence, the temperature of the animal may be mentioned as a third criterion of importance in deciding whether an animal is allowed to be milked; this temperature, which may be measured on the milk immediately or almost immediately after it has been extracted from the udder, is again and again recorded in the computer, so that for this animal an average temperature course can be found.

A fourth criterion of importance in deciding whether or not the animal is allowed to be milked will be the conductivity of milk. This, too, is determined and stored into the computer during milking. From the history data on the conductivity of milk, the course of this conductivity can be indicated and in a very early stage it can be signalized whether there is question of a (latent) mastitis, in which case the animal should be milked at relatively shorter intervals. In this connection, the course of the somatic cell count of the milk as recorded in the computer may also be mentioned as a criterion.

Finally, it should be mentioned that the frequency at which the animal goes to the milking parlour can be of importance as a criterion in deciding whether or not an animal is allowed to be milked. A higher frequency of calls at the milking parlour is to be expected when the animal is in heat. When the animal goes more frequently to the milking parlour just during this period, it will happen more often that it is decided not to milk the animal yet.

Of course, it is not necessary to use all these criteria at the same time. It is possible to decide whether or not to milk the animal on the basis of only a limited number of criteria. So, it is practicable to determine for each animal, on account of a number of criteria, the time which should have elapsed since the preceding milking turn of the respective animal for a new milking turn to be possible. In other words, this time is determined by a plurality of the said categories of data on the physical condition of the animal and/or the milk quality. Besides, a certain weighting factor can be assigned to each criterion or to each category of data on the physical condition of the animal and/or the milk quality. As soon as an animal has been milked and leaves the milking parlour, this time can be calculated, so that the time which should have elapsed before the animal can be milked again is immediately fixed.

The application of all kinds of criteria in deciding whether or not an animal can be milked is particularly of importance with a fully automated milking implement, wherein not only the milking itself is automated, but wherein also the cleaning or any other pre-treatment of at least the teats of an animal as well as the connection of the teat cups to, and their disconnection from, the animal's teats are performed automatically.

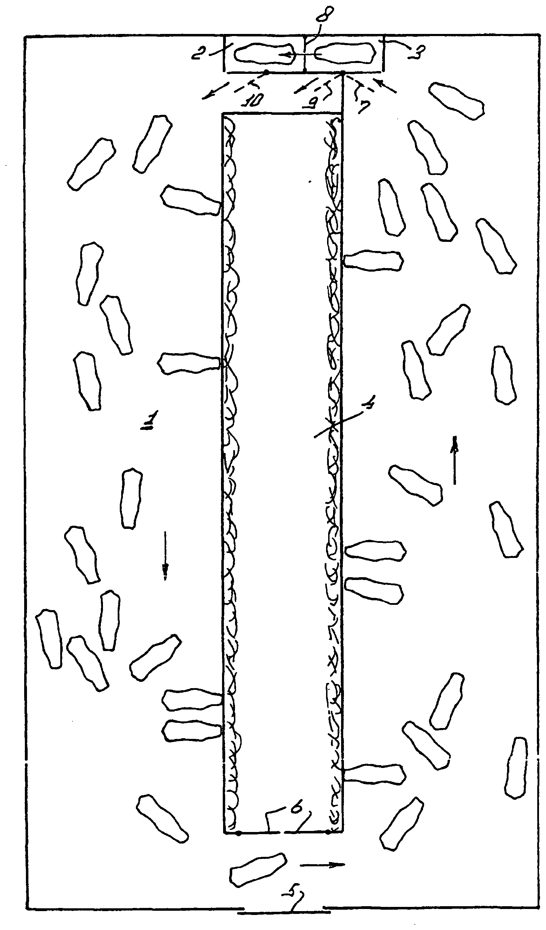

The invention will now be further explained with reference to the accompanying drawing, which shows a schematic representation of the implement according to the invention.

The drawing shows a loose housing system 1, in which there is disposed a milking parlour 2 and a selection box 3 along one of the short sides thereof. The loose housing 1 has been divided into two parts segregated by a feeding passage 4. Through doors 5 and 6, animal feedstuffs can be put into a manger or feed troughs along the sides of the feed passage. Furthermore, in the loose housing there may be optionally provided cow cubicles e.g. along the longitudinal sides of the loose housing system. It should be noticed that these cow cubicles are not included in the drawing.

The selection box 3 has an entry door 7, a first exit door 8 giving access to the milking parlour 2, and a second exit door 9 giving access to that part of the loose housing system 1 to which is also given access by the exit door 10 of the milking parlour 2. When the selection box 3 is free, an animal may enter it. Due to the fact that in the selection box 3 there is disposed a sensor which communicates with a (non-shown) computer system, and also that each animal bears a transponder attached to a neck strap, which transponder operates in conjunction with the sensor arranged in the selection box 3, an identification signal can be generated by the sensor and sent to the computer system, so that the animal can be identified. The combination of the transponder on the neck of each of the animals, the sensor in the selection box and the computer system constitutes a known per se animal recognition system. In the computer system, a criterion should be included which is determinative of the issue whether an animal in the milking parlour is to be milked or, in other words, whether an animal may be admitted from the selection box 3 to the milking parlour 2 to be milked there or that she is to be sent directly through the second exit door 9 to that part of the loose housing system to which the animal is also sent after its milking turn. When the animal passes through the second exit door 9 of the selection box 3 or the exit door 10 of the milking parlour, the animal should walk round the loose housing before she is able to report again at the selection box 3, whereby an animal not yet eligible for milking is prevented from again reporting immediately at the entrance of the selection box and re-entering it. For an animal may tend to do so, when she is given concentrates in the selection box or in the milking parlour.

The number of animals that has been milked since the latest milking turn of the animal reporting at the milking parlour may be taken as a criterion for being eligible for milking. This number which can be kept count of in the computer system is compared there against a predetermined numerical value. When the recorded number of animals exceeds this numerical value, the computer system issues a signal which denotes that the animal is allowed to be milked. This signal produced by the computer system consequently determines that the door 8 from the selection box to the milking parlour can be opened, provided that the milking parlour is free. When the recorded number of animals does not exceed the numerical value, the animal has reported too soon at the selection box and is not eligible for milking. The animal should then be sent away from the selection box through the exit door 9. This will take place on account of a different signal generated by the computer system, which signal is issued by the computer system in case that the recorded number of animals does not exceed the numerical value. The quantity of produced milk which has been obtained since the latest milking turn of the animal which has reported at the milking parlour may apply as a second criterion for making the decision whether an animal is eligible for milking or not. Again, when this quantity exceeds a predetermined numerical value, so many other animals have been milked since the latest milking turn of the relevant animal that the animal which reported herself is eligible for milking. Then, too, the first signal produced by the computer system makes that the exit door 8 from the selection box to the milking parlour is released, provided that the milking parlour is unoccupied.

The two criteria given here are of major importance when in the milking parlour there is provided a milking machine which is suitable for automatically connecting teat cups to the teats of an animal, for automatically milking the animal, and for automatically disconnecting the teat cups from the animal. Just in such a system, the farmer has no influence on the order in which the animals, which are indeed allowed to walk freely about in the loose housing system, go to the selection box in order to be directed from there to the milking parlour and to be milked there. Due to the fact that the animals can receive concentrates in the selection box or possibly in the milking parlour, too, the animals are lured towards the selection box or the milking parlour. On the other hand, the animals are not allowed to report again at the selection box for admission to the milking parlour within too short a time after they have been milked. By including one of the two mentioned criteria or both criteria in the computer system, a desired circulation of the animals through the loose housing system, the selection box and the milking parlour is realized.

The milking control system set forth hereinbefore is adaptable to the individual animals. When the number of animals milked after the latest milking turn of the animal reporting at the milking box is taken as a criterion, it is feasible by means of a suitably chosen numerical value, against which this number is compared, as explained before, to determine the limit as to which extent a certain animal can be milked more frequently than the other animals. On one hand, this numerical value may be fixed e.g. at a proportion of the number of animals which should be milked in the milking parlour in the ordinary course of events. The smaller this proportion is taken, the greater the probability of certain animals being milked more frequently than other animals.

The invention is by no means limited to the exemplary embodiment of the invention set forth here, but it also relates to all kinds of modifications thereto, of course, as far as falling within the scope of the accompanying claims.

## Claims

1. A method of automatically milking animals which are allowed to move about freely in a dwelling area, such as a cowhouse or a pasture, and which are individually allowed to go to a milking parlour provided with a milking robot and there to be identified for milking by means of an animal recognition system connected to a computer, in which an animal is milked when, since the preceding milking turn of this animal a time has elapsed which, again and again, is defined by data on the physical condition of the animal and/or the quality of the milk, **characterized in that** the said time is defined or at least co-defined by the degree of activity of the animal as defined by means of an activity meter.

2. A method according to claim 1, **characterized in that** the said time is defined or at least co-defined by the course of the oestrous period recorded in the computer.

3. A method of automatically milking animals which are allowed to move about freely in a dwelling area, such as a cowhouse or a pasture, and which are individually allowed to go to a milking parlour provided with a milking robot and there to be identified for milking by means of an animal recognition system connected to a computer, in which an animal is milked when, since the preceding milking turn of this animal a time has elapsed which, again and again, is defined by data on the physical condition of the animal and/or the quality of the milk, **characterized in that** the said time is defined or at least co-defined by the course of the oestrous period recorded in the computer.

4. A method according to any one of claims 1 to 3, **characterized in that** the said time is defined or at least co-defined by history data on the conductivity of milk stored in the computer.

5. A method of automatically milking animals which are allowed to move about freely in a dwelling area, such as a cowhouse or a pasture, and which are individually allowed to go to a milking parlour provided with a milking robot and there to be identified for milking by means of an animal recognition system connected to a computer, in which an animal is milked when, since the preceding milking turn of this animal a time has elapsed which, again and again, is defined by data on the physical condition of the animal and/or the quality of the milk, **characterized in that** the said time is defined or at least co-defined by history data on the conductivity of milk stored in the computer.

6. A method according to any one of claims 1 to 5, **characterized in that** the said time is defined or at least co-defined by the milk temperature recorded in the computer.

7. A method of automatically milking animals which are allowed to move about freely in a dwelling area, such as a cowhouse or a pasture, and which are individually allowed to go to a milking parlour provided with a milking robot and there to be identified for milking by means of an animal recognition system connected to a computer, in which an animal is milked when, since the preceding milking turn of this animal a time has elapsed which, again and again, is defined by data on the physical condition of the animal and/or the quality of the milk, **characterized in that** the said time is defined or at least co-defined by the milk temperature recorded in the computer.

8. A method according to any one of claims 1 to 7, **characterized in that** the said time is defined or at least co-defined by the course of the somatic cell count as recorded in the computer.

9. A method of automatically milking animals which are allowed to move about freely in a dwelling area, such as a cowhouse or a pasture, and which are individually allowed to go to a milking parlour provided with a milking robot and there to be identified for milking by means of an animal recognition system connected to a computer, in which an animal is milked when, since the preceding milking turn of this animal a time has elapsed which, again and again, is defined by data on the physical condition of the animal and/or the quality of the milk, **characterized in that the** said time is defined or at least co-defined by the course of the somatic cell count as recorded in the computer.

10. A method according to any one of claims 1 to 9, **characterized in that** the said time is defined or at least co-defined by the frequency at which an animal goes to the milking parlour.

11. A method of automatically milking animals which are allowed to move about freely in a dwelling area, such as a cowhouse or a pasture, and which are individually allowed to go to a milking parlour provided with a milking robot and there to be identified for milking by means of an animal recognition system connected to a computer, in which an animal is milked when, since the preceding milking turn of this animal a time has elapsed which, again and again, is defined by data on the physical condition of the animal and/or the quality of the milk, **characterized in that** the said time is defined or at least co-defined by the frequency at which an animal goes to the milking parlour.

12. A method according to any one of claims 1 to 11, **characterized in that** the said time is defined by a plurality of the said categories of data on the physical condition of the animal and/or the milk quality, with a weighting factor being assigned to each category.

13. A method according to any one of claims 1 to 12, **characterized in that** the said time is calculated as soon as an animal leaves the milking parlour.

## Patentansprüche

1. Verfahren zum automatischen Melken von Tieren, die sich in einem Aufenthaltsbereich, wie z. B. einem Kuhstall oder einer Weide, frei bewegen können und einzeln zu einem mit einem Melkroboter versehenen Melkstand gehen und dort zum Melken mittels eines mit einem Computer verbundenen Tiererkennungssystems identifiziert werden können, wobei ein Tier gemolken wird, wenn seit dem vorhergehenden Melkvorgang dieses Tieres ein Zeitraum verstrichen ist, der immer wieder durch Daten über den Gesundheitszustand des Tieres und/oder die Milchqualität definiert wird, **dadurch gekennzeichnet, dass** der Zeitraum durch den mittels eines Aktivitätsmessers gemessenen Grad der Aktivität des Tieres definiert oder zumindest mit definiert wird.

2. Verfahren nach Anspruch 1, **dadurch gekennzeichnet, dass** der Zeitraum durch den Verlauf der in dem Computer aufgezeichneten Brunst definiert oder zumindest mit definiert wird.

3. Verfahren zum automatischen Melken von Tieren, die sich in einem Aufenthaltsbereich, wie z. B. einem Kuhstall oder einer Weide, frei bewegen können und einzeln zu einem mit einem Melkroboter versehenen Melkstand gehen und dort zum Melken mittels eines mit einem Computer verbundenen Tiererkennungssystems identifiziert werden können, wobei ein Tier gemolken wird, wenn seit dem vorhergehenden Melkvorgang dieses Tieres ein Zeitraum verstrichen ist, der immer wieder durch Daten über den Gesundheitszustand des Tieres und/oder die Milchqualität definiert wird, **dadurch gekennzeichnet, dass** der Zeitraum durch den Verlauf der in dem Computer aufgezeichneten Brunst definiert oder zumindest mit definiert wird.

4. Verfahren nach einem der Ansprüche 1 bis 3, **dadurch gekennzeichnet, dass** der Zeitraum durch in dem Computer gespeicherte, historische Daten über die Leitfähigkeit der Milch definiert oder zumindest mit definiert wird.

5. Verfahren zum automatischen Melken von Tieren, die sich in einem Aufenthaltsbereich, wie z. B. einem Kuhstall oder einer Weide, frei bewegen können und einzeln zu einem mit einem Melkroboter versehenen Melkstand gehen und dort zum Melken mittels eines mit einem Computer verbundenen Tiererkennungssystems identifiziert werden können, wobei ein Tier gemolken wird, wenn seit dem vorhergehenden Melkvorgang dieses Tieres ein Zeitraum verstrichen ist, der immer wieder durch Daten über den Gesundheitszustand des Tieres und/oder die Milchqualität definiert wird, **dadurch gekennzeichnet, dass** der Zeitraum durch in dem Computer gespeicherte, historische Daten über die Leitfähigkeit der Milch definiert oder zumindest mit definiert wird.

6. Verfahren nach einem der Ansprüche 1 bis 5, **dadurch gekennzeichnet, dass** der Zeitraum durch die in dem Computer gespeicherte Milchtemperatur definiert oder zumindest mit definiert wird.

7. Verfahren zum automatischen Melken von Tieren, die sich in einem Aufenthaltsbereich, wie z. B. einem Kuhstall oder einer Weide, frei bewegen können und einzeln zu einem mit einem Melkroboter versehenen Melkstand gehen und dort zum Melken mittels eines mit einem Computer verbundenen Tiererkennungssystems identifiziert werden können, wobei ein Tier gemolken wird, wenn seit dem vorhergehenden Melkvorgang dieses Tieres ein Zeitraum verstrichen ist, der immer wieder durch Daten über den Gesundheitszustand des Tieres und/oder die Milchqualität definiert wird, **dadurch gekennzeichnet, dass** der Zeitraum durch die in dem Computer gespeicherte Milchtemperatur definiert oder zumindest mit definiert wird.

8. Verfahren nach einem der Ansprüche 1 bis 7, **dadurch gekennzeichnet, dass** der Zeitraum durch den in dem Computer gespeicherten Verlauf des Keimgehaltes definiert oder zumindest mit definiert wird.

9. Verfahren zum automatischen Melken von Tieren, die sich in einem Aufenthaltsbereich, wie z. B. einem Kuhstall oder einer Weide, frei bewegen können und einzeln zu einem mit einem Melkroboter versehenen Melkstand gehen und dort zum Melken mittels eines mit einem Computer verbundenen Tiererkennungssystems identifiziert werden können, wobei ein Tier gemolken wird, wenn seit dem vorhergehenden Melkvorgang dieses Tieres ein Zeitraum verstrichen ist, der immer wieder durch Daten über den Gesundheitszustand des Tieres und/oder die Milchqualität definiert wird, **dadurch gekennzeichnet, dass** der Zeitraum durch den in dem Computer gespeicherten Verlauf des Keimgehaltes definiert oder zumindest mit definiert wird.

10. Verfahren nach einem der Ansprüche 1 bis 9, **dadurch gekennzeichnet, dass** der Zeitraum durch die Häufigkeit, mit der ein Tier zum Melkstand geht, definiert oder zumindest mit definiert wird.

11. Verfahren zum automatischen Melken von Tieren, die sich in einem Aufenthaltsbereich, wie z. B. einem Kuhstall oder einer Weide, frei bewegen können und einzeln zu einem mit einem Melkroboter versehenen Melkstand gehen und dort zum Melken mittels eines mit einem Computer verbundenen Tiererkennungssystems identifiziert werden können, wobei ein Tier gemolken wird, wenn seit dem vorhergehenden Melkvorgang dieses Tieres ein Zeitraum verstrichen ist, der immer wieder durch Daten über den Gesundheitszustand des Tieres und/oder die Milchqualität definiert wird, **dadurch gekennzeichnet, dass** der Zeitraum durch die Häufigkeit, mit der ein Tier zum Melkstand geht, definiert oder zumindest mit definiert wird.

12. Verfahren nach einem der Ansprüche 1 bis 11, **dadurch gekennzeichnet, dass** der Zeitraum durch eine Vielzahl der Kategorien von Daten über den Gesundheitszustand des Tieres und/oder die Milchqualität definiert wird, wobei jeder Kategorie ein Gewichtungsfaktor zugeordnet wird.

13. Verfahren nach einem der Ansprüche 1 bis 12, **dadurch gekennzeichnet, dass** der Zeitraum berechnet wird, sobald ein Tier den Melkstand verläßt.

## Revendications

1. Méthode de traite automatique d'animaux qui peuvent se déplacer librement dans une zone de vie de type étable ou pâturage et qui peuvent aller individuellement dans une salle de traite équipée d'un robot de traite où ils doivent être identifiés pour la traite à l'aide d'un système de reconnaissance des animaux relié à un ordinateur, **caractérisée en ce qu'**un animal est trait lorsqu'un certain laps de temps s'est écoulé depuis sa dernière traite, cet intervalle de traite étant redéfini à chaque fois en fonction des données sur l'état physique de l'animal et/ou sur la qualité du lait, **caractérisée en ce que** ledit intervalle de traite est défini ou au moins co-défini par le degré d'activité de l'animal qui est déterminé à l'aide d'un activimètre.

2. Méthode selon la revendication 1, **caractérisée en ce que** ledit intervalle de traite est défini ou au moins co-défini par l'évolution de la période de lactation enregistrée dans l'ordinateur.

3. Méthode de traite automatique d'animaux qui peuvent se déplacer librement dans une zone de vie de type étable ou pâturage et qui peuvent aller individuellement dans une salle de traite équipée d'un robot de traite où ils doivent être identifiés pour la traite à l'aide d'un système de reconnaissance des animaux relié à un ordinateur, **caractérisée en ce qu'**un animal est trait lorsqu'un certain laps de temps s'est écoulé depuis sa dernière traite, cet intervalle de traite étant redéfini à chaque fois en fonction des données sur l'état physique de l'animal et/ou sur la qualité du lait, **caractérisée en ce que** ledit intervalle de traite est défini ou au moins co-défini par l'évolution de la période oestrale enregistrée dans l'ordinateur.

4. Méthode selon l'une quelconque des revendications 1 à 3, **caractérisée en ce que** ledit intervalle de traite est défini ou au moins co-défini par des données d'historique relatives à la conductivité du lait enregistrées dans l'ordinateur.

5. Méthode de traite automatique d'animaux qui peuvent se déplacer librement dans une zone de vie de type étable ou pâturage et qui peuvent aller individuellement dans une salle de traite équipée d'un robot de traite où ils doivent être identifiés pour la traite à l'aide d'un système de reconnaissance des animaux relié à un ordinateur, **caractérisée en ce qu'**un animal est trait lorsqu'un certain laps de temps s'est écoulé depuis sa dernière traite, cet intervalle de traite étant redéfini à chaque fois en fonction des données sur l'état physique de l'animal et/ou sur la qualité du lait, **caractérisée en ce que** ledit intervalle de traite est défini ou au moins co-défini par des données d'historique relatives à la conductivité du lait enregistrées dans l'ordinateur.

6. Méthode selon l'une quelconque des revendications 1 à 5, **caractérisée en ce que** ledit intervalle de traite est défini ou au moins co-défini par la température du lait enregistrée dans l'ordinateur.

7. Méthode de traite automatique d'animaux qui peuvent se déplacer librement dans une zone de vie de type étable ou pâturage et qui peuvent aller individuellement dans une salle de traite équipée d'un robot de traite où ils doivent être identifiés pour la traite à l'aide d'un système de reconnaissance des animaux relié à un ordinateur, **caractérisée en ce qu'**un animal est trait lorsqu'un certain laps de temps s'est écoulé depuis sa dernière traite, cet intervalle de traite étant redéfini à chaque fois en fonction des données sur l'état physique de l'animal et/ou sur la qualité du lait, **caractérisée en ce que** ledit intervalle de traite est défini ou au moins co-défini par la température du lait enregistrée dans l'ordinateur.

8. Méthode selon l'une quelconque des revendications 1 à 7, **caractérisée en ce que** ledit intervalle de traite est défini ou au moins co-défini par l'évolution du décompte de cellules somatiques tel qu'il est enregistré dans l'ordinateur.

9. Méthode de traite automatique d'animaux qui peuvent se déplacer librement dans une zone de vie de type étable ou pâturage et qui peuvent aller individuellement dans une salle de traite équipée d'un robot de traite où ils doivent être identifiés pour la traite à l'aide d'un système de reconnaissance des animaux relié à un ordinateur, **caractérisée en ce qu'**un animal est trait lorsqu'un certain laps de temps s'est écoulé depuis sa dernière traite, cet intervalle de traite étant redéfini à chaque fois en fonction des données sur l'état physique de l'animal et/ou sur la qualité du lait, **caractérisée en ce que** ledit intervalle de traite est défini ou au moins co-défini par l'évolution du décompte de cellules somatiques tel qu'il est enregistré dans l'ordinateur.

10. Méthode selon l'une quelconque des revendications 1 à 9, **caractérisée en ce que** ledit intervalle de traite est défini ou au moins co-défini par la fréquence de passage d'un animal dans la salle de traite.

11. Méthode de traite automatique d'animaux qui peuvent se déplacer librement dans une zone de vie de type étable ou pâturage et qui peuvent aller individuellement dans une salle de traite équipée d'un robot de traite où ils doivent être identifiés pour la traite à l'aide d'un système de reconnaissance des animaux relié à un ordinateur, **caractérisée en ce qu'**un animal est trait lorsqu'un certain laps de temps s'est écoulé depuis sa dernière traite, cet intervalle de traite étant redéfini à chaque fois en fonction des données sur l'état physique de l'animal et/ou sur la qualité du lait, **caractérisée en ce que** ledit intervalle de traite est défini ou au moins co-défini par la fréquence de passage d'un animal dans la salle de traite.

12. Méthode selon l'une quelconque des revendications 1 à 11, **caractérisée en ce que** ledit intervalle de traite est défini par une pluralité desdites catégories de données sur l'état physique de l'animal et/ou sur la qualité du lait, un rapport de pondération étant attribué à chaque catégorie.

13. Méthode selon l'une quelconque des revendications 1 à 12, **caractérisée en ce que** ledit intervalle de traite est calculé dès qu'un animal quitte la salle de traite.
